# EUROPEAN PATENT SPECIFICATION

(11) **EP 4 612 625 B1**
(45) Date of publication and mention of the grant of the patent: **25.02.2026**
(21) Application number: 23706897.8
(22) Date of filing: 23.01.2023
(51) Int. Cl.: G06Q 10/06, G06Q 10/04, G06Q 10/08

(54) **OPTIMIZATION OF A PRODUCTION SYSTEM BASED ON PRODUCTION PLAN**
OPTIMIERUNG EINES PRODUKTIONSSYSTEMS AUF DER BASIS EINES PRODUKTIONSPLANS
OPTIMISATION D'UN SYSTÈME DE PRODUCTION SUR LA BASE D'UN PLAN DE PRODUCTION

(43) Date of publication of application: 10.09.2025
(73) Proprietor: Siemens Industry Software Inc., Plano, TX 75024 (US)
(72) Inventor: BLUMENFELD, Rafael, 4336901 Raanana (IL); GRIMM, Stephan, 81825 München (DE); LANGE, Ronald, 90766 Fürth (DE); MICHAELI, David, 6998603 Tel Aviv (IL); MILLIGAN, Patrick Jon, Chandler, Arizona 85248 (US); PESCHKE, Jörn, 90489 Nürnberg (DE); SCHLÖGL, Wolfgang, 90763 Fürth (DE)
(74) Representative: Siemens Patent Attorneys
(86) International application number: PCT/US2023/011333
(87) International publication number: WO 2024/158374

(56) References cited:
- WO-A1-02/37312
- CN-A- 103 093 301
- US-A1- 2013 190 913
- US-A1- 2016 154 910

## Description

### TECHNICAL FIELD

The present disclosure relates to the generation of a production plan for operating a production system. The production system may include one or more manufacturing machines.

### BACKGROUND

A bill of process (BOP) is a production plan that details the planned production approach for a specific product. It presents a best practices template for manufacturing each finished good. The bill of process lists production line configurations, tools, machines, and equipment needed to make the product. The BOP also contains the electronic work instructions (EWI) that explain how to make it. BOP information complements the manufacturing BOM (MBOM), or manufacturing bill of materials, which lists the materials and components needed to make the product.

Prior to the development of product lifecycle management (PLM) software, the bill of process was generated manually on paper or in isolated electronic documents. Any changes to a product and/or its manufacturing processes necessitated manual updating of the BOP, MBOM, and EWI - an inefficient and error-prone process that lacked both visibility and scalability.

Modem PLM systems generate BOPs within integrated manufacturing process planning software. This integrated capability allows changes to be reflected in the BOP rapidly - and communicated immediately to the shop floor for implementation. The bill of process communicates the production plan to the manufacturing operations management (MOM) solution, especially the manufacturing execution system (MES), to guide and orchestrate the implementation of the plan.

For industries in which product complexity is increasing and lot or batch size is decreasing, integrated bills of process have become imperative for cost-competitive manufacturing operations.

The bill of process reflects close collaboration between engineering, manufacturing, and execution through manufacturing process planning software within a company's PLM solution. Manufacturers use the PLM's workflow, change management, and configuration capabilities to create the BOP. The PLM also enables process planners to standardize and reuse manufacturing processes in the BOP across multiple plants.

Manufacturing and assembly planning software tools enable users to create processes and operations with the BOP to represent the sequence of steps in their production plans. They can assign relevant parts and assemblies from the MBOM to specific operations, along with tools and resources from the bill of equipment (BOE) or through a library of classified objects. When creating or maintaining a BOP, the user can manually reuse existing rules and templates, use a logical part assignment command to automatically assign parts that will be consumed in different operations, use an auto-completion tool to reference parts, resources, and visual aids that will populate electronic work instructions, generate plant-specific BOPs from the product BOP, trace commands between plant BOPs and the product BOP, update the product BOP to reflect any design changes, automatically perform an accountability check of processes and workstations affected by each change, and address identified conflicts.

These functions result in full traceability and visibility of the BOP throughout a product's engineering, manufacture, and design evolution. A bill of process built on manufacturing process planning software allows the manufacturer to leverage existing product and process information, share cross-depart-mental workflows, capture shop floor feedback, and manage changes effectively.

An additional benefit is that an integrated BOP enables manufacturers to reuse standardized best practices and adjust them based on plant-level requirements, leading to greater productivity and reduced operational costs. Additional benefits are ensuring that engineering and manufacturing are kept in sync, eliminating user errors and increasing quality. Further benefits lie in the acceleration of new product introductions (NPIs), optimization of cycle times, and ensuring accurate and efficient change management.

Teamcenter software's Manufacturing Process Planner and Easy Plan applications provide an easy to use environment to author the textual instructions for operations under the bill of process (BOP) and an auto-completion tool to reference parts, resources, and visual aids that users would like to document in shop floor work instructions. This eliminates user errors from manual typing and increases quality. Symbols, hazards and standard text fragments are available for textual instructions and ensure reuse of company standards. Visual aids can be created in the 3D graphics to guide shop floor operators in their daily assembly work while using the Electronics Work Instructions (EWI) application.

Teamcenter software's Manufacturing Process Planner and Easy Plan applications provide manufacturing engineers the means to create and maintain the bill of process (BOP).

Users can easily create processes and operations within the BOP to represent the sequence of steps in their assembly plans. They can assign the relevant parts and assemblies from the MBOM to specific operations, along with the required tools and resources from the bill of equipment (BOE) or through a library of classified objects. Changes coming from product engineering can easily be streamlined into the BOP using accountability check tools, ensuring that engineering and manufacturing are kept in sync. US 2013/190913 A1 refers to a method for production management in a Manufacturing Execution System (MES). US 2016/154910 A1 refers to a common plant model for modeling of physical plant items of a production plant within a manufacturing execution system having an engineering environment and a runtime environment. WO 02/37312 A1 refers to optimizes constrained resources across multiple networks and produces an optimized plan to allocate and coordinate limited resources based upon user-defined strategies.

### SUMMARY

It is an object to provide a flexible production plan for improving standardization and/or increasing production capacity and efficiency of a production system.

The scope of the present disclosure is defined solely by the appended claims and is not affected to any degree by the statements within this summary. The present embodiments may obviate one or more of the drawbacks or limitations in the related art.

The object is achieved by a method. (e.g., a computer-implemented method), of generating a production plan (BOP). The method includes obtaining one or more product and/or production characteristics, (e.g., a production content, a production time, and/or a production quantity, for example in a E-BOM, M-BOM, and/or CAD file format), for a product to be manufactured. The method further includes determining, by a rule engine, based on the characteristics one or more library elements from a plurality of library elements, wherein each library element includes one or more process descriptions relating to the characteristic. The method further includes arranging, by the rule engine, the one or more process descriptions into a production plan, (e.g., a BOP).

The object is also achieved by a computer program for generating the production plan and a production system for controlling a production system based on the generated production plan.

### BRIEF DESCRIPTION OF THE DRAWINGS

Figure 1 shows an example of a production planning system for generating a bill of process, BOP, for a product.
Figure 2 shows an example of a production system wherein the production is controlled based on a generated production plan.
Figure 3 shows another exemplary production system for assembling a cabinet.
Figure 4 shows examples of a plurality of bill of material and a bill of process and the interconnections between the same.
Figure 5 shows exemplary library elements and their arrangement into a production plan.

### DETAILED DESCRIPTION

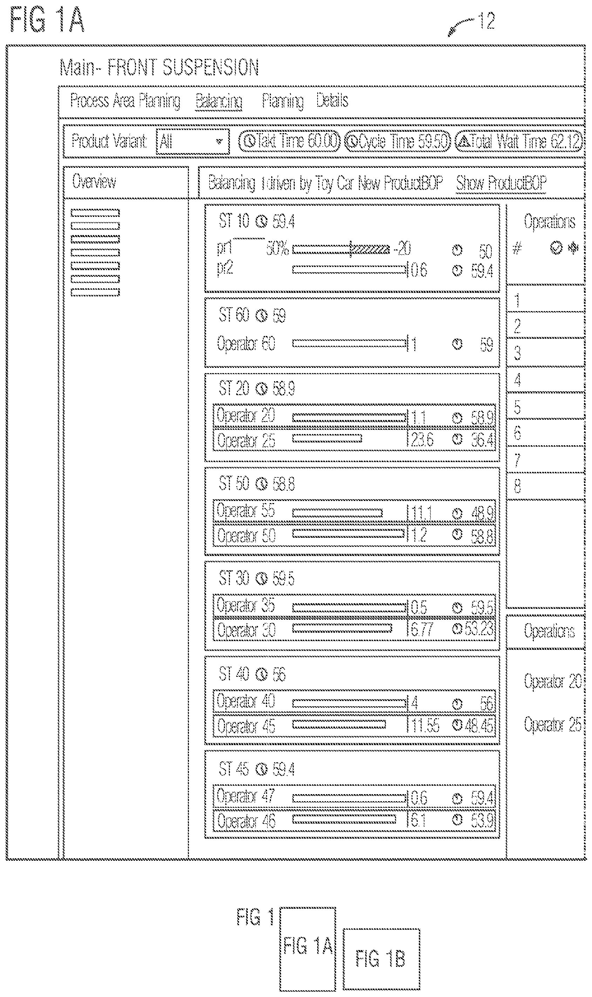

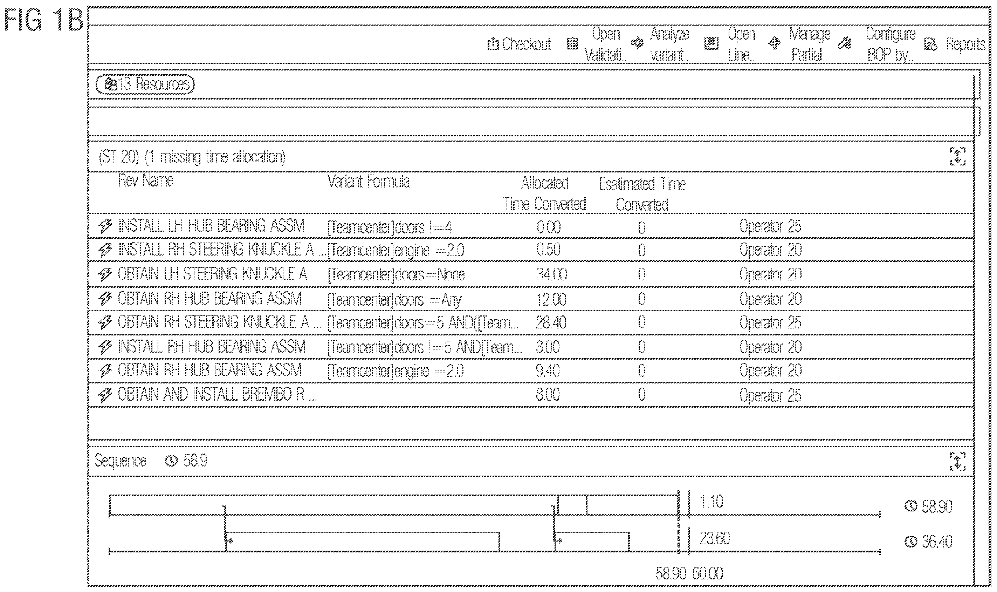

In Figure 1, a production planning system in the form of a software is shown. The production planning system may be used to generate a production plan for producing or manufacturing a product. In this case the product is a front suspension of a vehicle.

In a global production environment, manufacturers find themselves looking for ways to reduce time-to-market, control costs and manage complexity while maintaining high quality. Factors such as connectivity to manufacturing engineering and production, effectively managing changes, assembly line balancing, forecasting production orders, and more are considered in the planning and execution phases. Teamcenter Easy Plan, a role-based planning solution, delivers key capabilities to support and execute manufacturing planning. Figure 1 shows a graphical user interface of a production planning system, in this case Teamcenter Easy Plan.

A production planning system helps increase operational efficiency, reduce shop floor errors, and maximize your overall engineering productivity. A production planning system, such as Easy Plan, helps leveraging existing product and process information, as well as share process descriptions, in order to optimize a manufacturing bill-of-materials (BOM) and/or process plan, capture shop floor feedback, and manage changes effectively.

The production planning system provides an environment to capture manufacturing data from different systems and helps manage global production scenarios involving production sites in different locations. The production planning system may be connected to engineering tool and/or control system or control unit so that the data may be exchanged from one to the other, thereby reducing cost and time for new product introduction (NPI). The ability to receive shop floor feedback ensures constant process and quality improvement.

The production planning system may provide optimization tools for improving plant-specific activities with features such as line balancing, cycle time analysis and station-level walk path estimates. With the production planning system, accurate production sequence and/or time analysis of value-added and non-value-added process steps can lead to maximum production productivity. Standard time data cards or accurate cycle time estimates may be integrated in the production planning system. What-if scenarios can be defined, executed, and analyzed to ensure the feasibility of production processes.

The production planning system provides a solution to define and/or manage a production plan, such as a bill-of-process (BOP) to improve quality while accelerating NPI by validating production plans much earlier. This eliminates costly, late design changes. The ability to re-use process descriptions, such as best practices, and/or adjust them based on product and/or production characteristics, such as plant-level requirements, leads to significant cost savings and productivity improvements. For centralized manufacturing planning, this approach overcomes the limitation of working with a subset of programs and product configurations. In this manner, any program can be configured to reflect actual production scenarios. The production planning system provides a collaborative environment where the process template may be configured to the local resources and capabilities. This integrated central and factory-level planning approach allows better traceability and change propagation to ensure costs associated with product modifications are minimized.

The production planning system thus may provide a solution to author manufacturing work instructions and/or one or more control programs based on the production plan and one or more product and/or production characteristics, (e.g., a M-BOM). The production planning system provides an easy-to-use environment to author textual information of one or more process descriptions that may be delivered to the shop floor for operators and/or manufacturing machines to execute the production plan. Using the production plan and/or the generated control program on the shop floor, production quality can be ensured.

In any case, manual creation of the BOP presents challenges when considering the scenario of rapid changeovers. For example, if a system is required to manufacture different products every 4-5 hours it becomes infeasible to reprogram the robotic handling system between changeovers. Even for an autonomous system that doesn't require reprogramming but rather the creation of a BOP, the manual generation of this BOP becomes a roadblock because the generation of the BOP for a new product may take approximately several hours. When extrapolating this to fully customized production of lot size one, (e.g., at a rate of 50 parts per minute), it becomes clear that manual editing of the BOP will not scale as required. To that end, European patent application EP 21178050.7 proposes to automatically generate a BOP based on a simulation.

A production plan, such as a BOP, may include methods of production, tooling, fixtures, machinery, sequence of operations, processing time of operations, and/or assembly methods. The production plan may also determine when to perform one or more production steps and/or in which order one or more production steps are carried out. The one or more production steps may also include one or more inspection steps in order to determine a product and/or production quality.

A rule engine also known as semantic reasoner, reasoning engine, or simply a reasoner, is a piece of software that is able to infer logical consequences. The rule engine may thus be employed to determine a production plan. The inference rules may be specified by an ontology language, and, in certain examples, a description logic language. The rule engines may use first-order predicate logic to perform reasoning. There are also examples of probabilistic rule engines or reasoners, including non-axiomatic reasoning systems, and probabilistic logic networks.

In order to determine a production plan, one or more product and/or production characteristics may be obtained. The product and/or production characteristics may include a production content, a production time, and/or a production quantity, (e.g., in a E-BOM, M-BOM, and/or CAD file format), for the product to be manufactured.

For example, according to ontology engineering methodology, application-specific requirements may be collected for, (e.g., conceptualizing and modeling), an ontology. For example, the ontology may be implemented as a conceptual factory information model in the ontology editor Protégé. Further factory information from an industrial factory planning project may be imported as well. The product and/or production characteristics, e.g., in a file format, may be mapped to the ontology. Finally, based for example on the semantic web rule language (SWRL), rules for semantic reasoning may be defined and/or applied. For example, capacity utilization for specific production resources is deduced from available factory information for different planning scenarios.

Eventually, the calculation results are used to automatically generate a production plan, which is available for further planning processes. Recalculations may be automatically performed with updates of factory information. Similarly, factory information from different projects can also be processed, as the rule engine may apply generic rules and/or calculations.

In addition, library elements may be provided in digital form. For example, the library elements may be stored on a (non-transitory) storage medium. The library elements may be provided in the form of and/or be part of a digital library, an online library, an internet library, a digital repository, or a digital collection is an online database. The library elements may include textual description of one or more process descriptions.

In addition to storing the textual description, the digital library may be used for organizing, searching, and retrieving the content contained in the collection. Digital libraries can vary immensely in size and scope and can be maintained by individuals or organizations. The digital content may be stored locally or accessed remotely via computer networks. These information retrieval systems are able to exchange information with each other through interoperability and sustainability.

The library elements may include standardized best practices for the production of the product. This enables the re-use of the process descriptions for the best practices identified. Furthermore, this allows for amending the textual process description of the best practices based on the product and/or production characteristic(s).

Now, the rule engine may be used to determine a production plan using the product and/or production characteristic(s) in addition to the one or more library elements.

The rule engine may match the product and/or production characteristic(s) to one or more library elements. The rule engine may match the product and/or production characteristic(s) to one or more process descriptions of a library elements. The rule engine may match the product and/or production characteristic(s) to one or more process descriptions of a plurality (of different) library elements. Thus, the rule engine may select one or more process descriptions, (e.g., based on the matching). The rule engine may thus arrange the one or more (selected) process descriptions into a production plan, (e.g., a BOP).

The matching, selecting, and arrangement of the one or more process descriptions into a production plan may be based on plant-level requirements. As a result, the production plan obtained may lead to significant savings of resources and may improve productivity and/or quality.

For example, when a new product or a new variant of a product is to be manufactured the production plan may be created or updated. Furthermore, in addition or alternatively, in case new library elements are available in the library, a production plan may be created or updated. In these cases, a command may be initiated and/or the command for generating production plan may be obtained by the production planning system.

As part of the rule engine or as a preprocessing of the one or more product and/or production characteristics, (e.g., by the production planning system), semantic information from the one or more product and/or production characteristics, (e.g., by mapping the one or more product and/or production characteristics onto a data model, such as an ontology), may be determined. An ontology may be defined or an existing, publicly available, ontology reused. For example, a product characteristic, (e.g., as obtained from a BOM), may require a surface of the product to possess a certain roughness. Hence, the data model may be used to derive said semantic meaning "roughness" form the characteristic in the BOM. Then, a process description, (e.g., including one or more production steps), by way of which said surface roughness is obtained may be selected, for example, using the rule engine.

Having derived semantic meaning from the one or more product and/or production characteristics, semantic reasoning using the rule engine can be performed. Hence, the semantic information from the one or more product and/or production characteristics can be compared with the process description(s) of the plurality of library elements. Thus, one or more process descriptions may be determined from one or more library elements, by applying rules based on the product characteristics (or semantic information derived therefrom). Hence, by comparing the semantic information derived from the product and/or production characteristic with the semantic information of the one or more process description (of one or more library elements), one or more process descriptions can be determined and/or arranged in an order and thus yield a production plan.

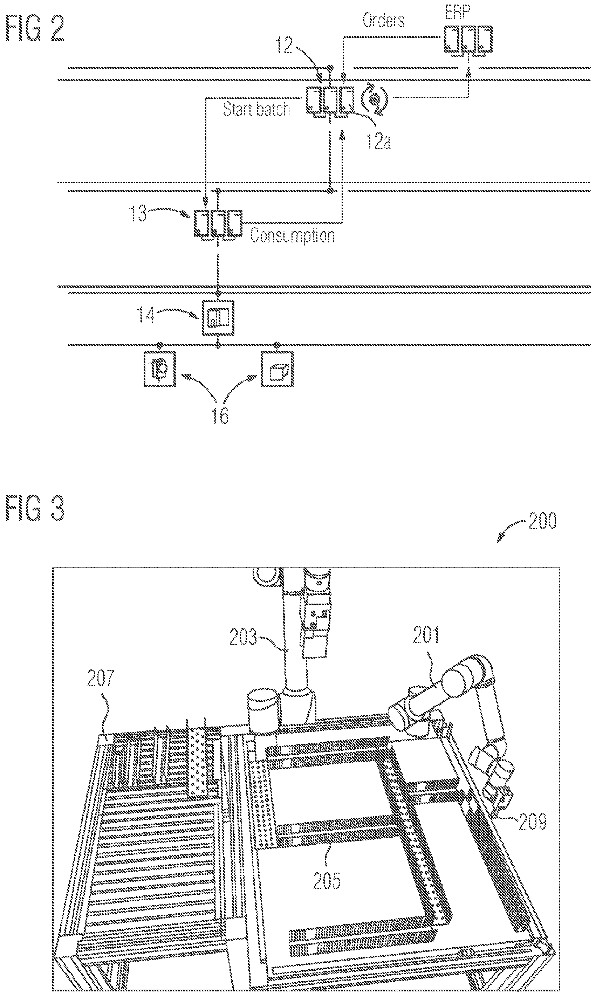

Now, turning to Figure 2, the production plan may be transformed into one or more control functions of a control program. Figure 2 provides a high-level functional overview of a production system. Based on the software shown and described herein, a synchronization between the production system's planning software and a control unit on the shop floor can be achieved. Thus, in a way, the one or more process descriptions and/or the production plan may correspond to one or more functions of and/or in the control program. It is thus possible that one or more functions of a control software are generated by an engineering tool based on the production plan. The control software may then be transmitted to a control unit controlling the production. The control software may then be loaded by a control unit. The one or more manufacturing machines may then be operated by the control unit according to the functions of the control software. To that end, the production plan may be compiled by an engineering tool into a machine code. The control program thus may include the machine code and/or the machine code being readable by the control unit.

For example, the autonomous cabinet assembly shown in Figure 3 may be used for highly customized manufacturing such as producing products, e.g., of lot size one. The assembly includes a first robotic arm 203 and a second robotic arm 201. A tool 209 may be associated with robotic arm 201 to perform work on a workpiece 205. Additional pieces 207 are provided that will be incorporated into workpiece 205. Robotic arm 203 may be equipped with an image sensor for providing machine vision over additional pieces 207 or workpiece 205. Information acquired through the image sensor may be used by an autonomous machine to determine processing steps, such as steps contained in a BOP for the product. Robotic arm 201 and robotic arm 203 may be configured to work in cooperation with one another to produce the desired product. For example, information acquired by robotic arm 203 through an image sensor may be used to inform the system on how and where to move robotic arm 201 and its associated tool 209. The location and orientation of each part is important for determining a subsequent process step. If pieces 207 have a variance in length, (for example, due to a manual cutting process), the pieces 207 may not fit between other previously placed parts in workpiece 205. If pieces 207 need to be placed between others within a tight tolerance constraint the additional piece 207 may need to be inserted in a specific manner such as by tilting the part during insertion.

Thus, a product may be assembled using a BOM and/or BOP. In addition to the product information, it is also required to take physical producibility into account. That is, can a part be placed after another part without collisions or can the machine reach the required locations or follow the required paths given its physical constraints or potential collisions with other objects. Moreover, there may be other product dependent constraints to consider. For example, in some cases forces should be limited to a specific level. Another constraint may be that objects should not be moved around a specific axis to prevent spills or sheer forces which could result in dropping the product.

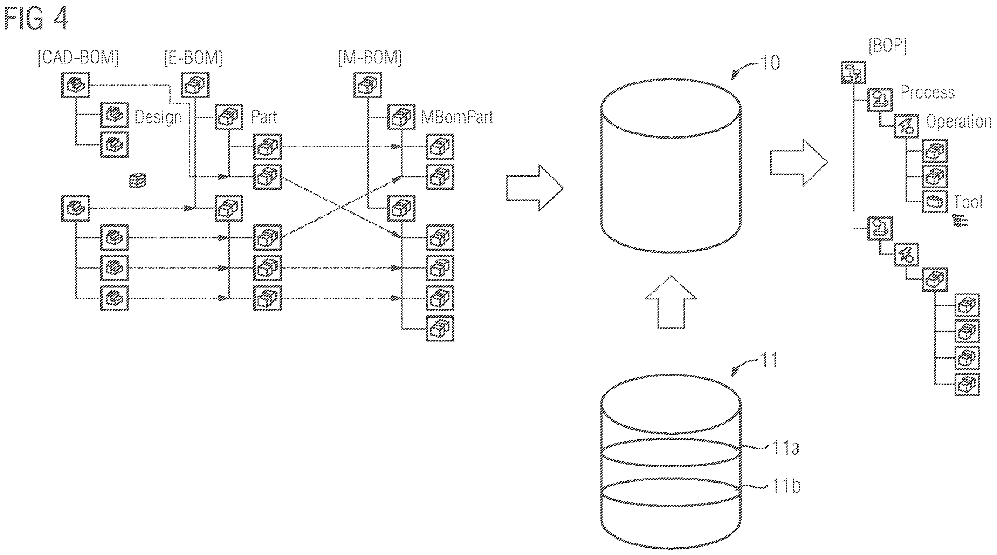

Figure 4 illustrates exemplary BOMs and BOPs. As shown, one or more BOMs, (such as CAD-BOM, E-BOM, and/or M-BOM), may exist. Based on the BOM and/or library elements, a production plan in the form of a BOM may be generated based on a rule engine. To that end, one or more of the BOMs may be loaded into a production planning software. Furthermore, one or more library elements may be available from a digital library either part of or communicatively coupled to the production planning software. The production planning software may also include a rule engine such as semantic reasoner. The reasoner may be used to match the elements of a BOM to one or more library elements. Thus, identifying an optimal production step. A production plan may be obtained as a result that includes a plurality of production steps as selected from the library elements.

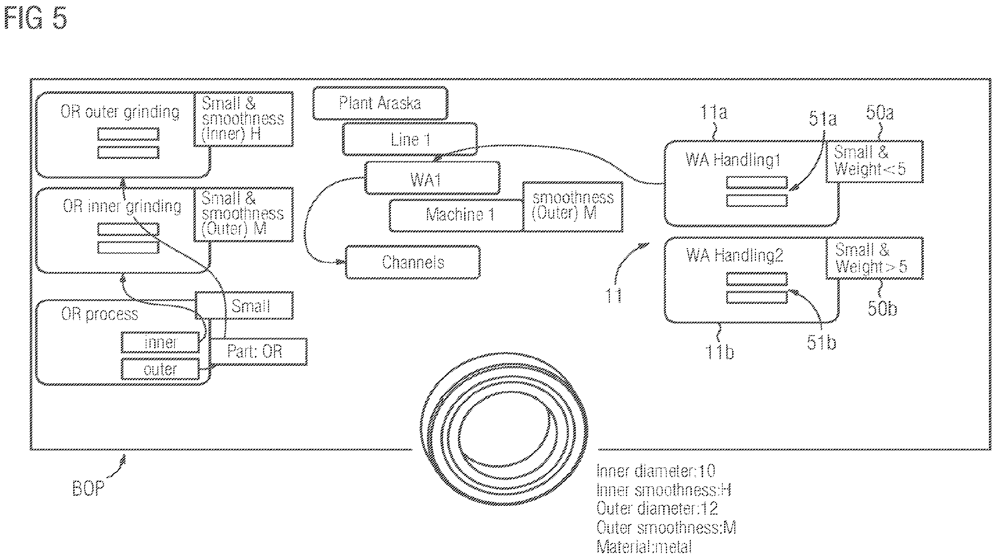

Figure 5 shows exemplary library elements 11a, 11b and their arrangement into a production plan BOP.

The library elements 11a, 11b may include process descriptions 51a, 51b. The library elements themselves may be contained in a library, as described herein.

The one or more process descriptions may relate to the handling of a part in a work area, WA. The process descriptions may include (e.g., textual) information relating to operations, documents, etc. and may be part the library elements 11a, 11b. The process description may represent the content of the process, e.g., one or more process steps to be performed by one or more machines in a work area. The library may contain process descriptions relating to operations such as grinding, machining, and/or drilling.

The library elements may be enhanced with semantic information 50a, 50b. The sematic information may be derived from the one or more process descriptions. The sematic information may be derived from one or more product or production characteristics. For example, the based on a product characteristic, (e.g., contained in a BOM and/or in a CAD-file format), the semantic information may be derived. Hence, the library may contain a first library element, WA handling 1, including one or more process description applicable in case a part's weight and/or size is small, (e.g., below 5), and may include a second library element, WA handling 2, including one or more process description applicable in case a part's weight and/or size is large, (e.g., above 5).

The suitable one or more process description may then be determined and/or selected based on one or more product or production characteristics, e.g., the part features and/or the part description, e.g., also available in textual form.

A work area, WA, may include one or more machines to perform the process described in the process description.

In the exemplary embodiment of Figure 5, the production plan BOP may include the processing of a part such as the outer ring, OR, of a bearing. The manufacturing process may include the grinding of the inner and/or outer surface of the outer ring according to the process description determined. To that end, a rule engine may select the suitable one or more library elements. As shown in Figure 5, the outer ring of a bearing is made out of metal and shall possess an inner diameter of 10, an inner smoothness of H, an outer diameter of 12 and an outer smoothness of M. These product characteristics may be evaluated by the rule engine and, e.g., compared to the information from the process descriptions in the library elements. Accordingly, the processing of inner surface of the outer ring may be performed by an inner surface grinding based on a selected library element, e.g., in a work area WA1 and controlled based on the process description of the process descriptions in the library element 11a. The processing of the outer surface of the outer ring may be performed by an outer surface grinding based on another selected library element, e.g., in a work area WA2 and controlled based on the process description of the process descriptions in the library element 11b.

It is to be understood that the elements and features recited in the appended claims may be combined in different ways to produce new claims that likewise fall within the scope of the present disclosure. Thus, whereas the dependent claims appended below depend on only a single independent or dependent claim, it is to be understood that these dependent claims may, alternatively, be made to depend in the alternative from any preceding or following claim, whether independent or dependent, and that such new combinations are to be understood as forming a part of the present specification.

While the present disclosure has been described above by reference to various embodiments, it may be understood that many changes and modifications may be made to the described embodiments. It is therefore intended that the foregoing description be regarded as illustrative rather than limiting, and that it be understood that all equivalents and/or combinations of embodiments are intended to be included in this description.

## Claims

1. A method of generating a production plan (BOP), the method comprising:
obtaining one or more product and/or production
characteristics (E-BOM, CAD-BOM, M- BOM) for a product to be manufactured;
determining, by a rule engine (10), based on the product and/or production characteristics, one or more library elements from a plurality of library elements (I 1a, 11b), wherein each library element comprises one or more process descriptions relating to the product and/or production characteristic; and
arranging, by the rule engine (10), the one or more process descriptions into a production plan (BOP),
generating, by an engineering tool (13), based on the production plan, one or more functions of a control program; and
transmitting the control program to a control unit (14) controlling the production; and/or loading, by the control unit (14), the control program; and
operating, by the control unit (14), one or more manufacturing machines (16) according to the functions of the control program.

2. The method according to claim 1, further comprising:
storing, and eventually updating, the plurality of library elements (11a, 11b) in a memory' of a data processing device, and/or running the rule engine (10) as part of a production planning system (12.) that is executed on the data processing device (12a).

3. The method according to claim 1 or 2, further comprising:
obtaining, by the production planning system (12), a command for generating a production plan of a product to be manufactured.

4. The method according to claim 3, wherein the production plan of the product comprises a new variant of the product.

5. The method according to any of claims 1-4, further comprising: determining, by the production planning system (12), semantic information from the one or more product and/or production characteristics.

6. The method according to claim 5, wherein the determining comprises mapping the one or more product and/or production characteristics onto a data model.

7. The method according to claim 6, wherein the data model is an ontology.

8. The method according to any of claims 1-7, wherein the determining by the rule engine (10) comprises comparing the semantic information from the one or more product and/or production characteristics with the process description of the plurality of library elements.

9. The method according to claim 8, wherein the comparing is based on semantic reasoning.

10. The method according to any claims 1-9, wherein the generating by the engineering tool (13) comprises compiling the production plan into a machine code.

11. The method according to any claims 1-10, wherein the method is a computer- implemented method.

12. The method according to any of claims 1-11, wherein the one or more product and/or production characteristics comprise a production content, a production time, and/or a production quantity such as in a E-BOM, M-BOM, and/or CAD file format.

13. A computer program (12). preferably stored on a non-transitory medium, the computer program comprising a production planning system (12) and a rule engine (10) according to any one of the preceding claims.

14. A production system (200) comprising one or more control units for operating the production system (200), wherein the operation is controlled by the one or more control units based on the production plan (BOP) generated according to any one of the preceding claims.

## Patentansprüche

1. Verfahren zum Erzeugen eines Produktionsplans (BOP), wobei das Verfahren Folgendes umfasst:
Erhalten eines oder mehrerer Produkt- und/oder Produktionsmerkmale (E-BOM, CAD-BOM, M-BOM) für ein herzustellendes Produkt;
Bestimmen, durch eine Regel-Engine (10), basierend auf den Produkt- und/oder Produktionscharakteristiken, eines oder mehrerer Bibliothekselemente aus einer Vielzahl von Bibliothekselementen (I la, 11b), wobei jedes Bibliothekselement eine oder mehrere Prozessbeschreibungen bezüglich des Produkts und/oder Produktionscharakteristik umfasst; und
Anordnen, durch die Regel-Engine (10), der einen oder der mehreren Prozessbeschreibungen in einem Produktionsplan (BOP),
Erzeugen, durch ein Engineering-Tool (13), basierend auf dem Produktionsplan, einer oder mehrerer Funktionen eines Steuerprogramms; und
Übertragen des Steuerprogramms an eine Steuereinheit (14), die die Produktion steuert; und/oder Laden des Steuerprogramms durch die Steuereinheit (14); und
Betreiben, durch die Steuereinheit (14), einer oder mehrerer Fertigungsmaschinen (16) gemäß den Funktionen des Steuerprogramms.

2. Verfahren nach Anspruch 1, das ferner Folgendes umfasst:
Speichern und schließlich Aktualisieren der Vielzahl von Bibliothekselementen (11a, 11b) in einem Speicher' einer Datenverarbeitungsvorrichtung und/oder Ausführen der Regel-Engine (10) als Teil eines Produktionsplanungssystems (12.), das auf der Datenverarbeitungsvorrichtung (12a) ausgeführt wird.

3. Verfahren nach Anspruch 1 oder 2, das ferner Folgendes umfasst: Erhalten, durch das Produktionsplanungssystem (12), eines Befehls zum Erzeugen eines Produktionsplans eines herzustellenden Produkts.

4. Verfahren nach Anspruch 3, wobei der Produktionsplan des Produkts eine neue Variante des Produkts umfasst.

5. Verfahren nach einem der Ansprüche 1-4, das ferner Folgendes umfasst: Bestimmen, durch das Produktionsplanungssystem (12), semantischer Informationen aus dem einen oder den mehreren Produkt- und/oder Produktionscharakteristiken.

6. Verfahren nach Anspruch 5, wobei das Bestimmen das Abbilden des einen oder der mehreren Produkt- und/oder Produktionscharakteristiken auf ein Datenmodell umfasst.

7. Verfahren nach Anspruch 6, wobei das Datenmodell eine Ontologie ist.

8. Verfahren nach einem der Ansprüche 1-7, wobei das Bestimmen durch die Regel-Engine (10) das Vergleichen der semantischen Informationen von dem einen oder den mehreren Produkt- und/oder Produktionscharakteristiken mit der Prozessbeschreibung der Vielzahl von Bibliothekselementen umfasst.

9. Verfahren nach Anspruch 8, wobei das Vergleichen auf semantischem Denken basiert.

10. Verfahren nach einem der Ansprüche 1-9, wobei das Erzeugen durch das Engineering-Tool (13) das Kompilieren des Produktionsplans in einen Maschinencode umfasst.

11. Verfahren nach einem der Ansprüche 1-10, wobei das Verfahren ein computerimplementiertes Verfahren ist.

12. Verfahren nach einem der Ansprüche 1-11, wobei das eine oder die mehreren Produkt- und/oder Produktionscharakteristiken einen Produktionsinhalt, eine Produktionszeit und/oder eine Produktionsmenge umfassen, wie etwa in einem E-BOM-, M-BOM- und/oder CAD-Dateiformat.

13. Computerprogramm (12), das vorzugsweise auf einem nichtflüchtigen Medium gespeichert ist, wobei das Computerprogramm ein Produktionsplanungssystem (12) und eine Regel-Engine (10) nach einem der vorhergehenden Ansprüche umfasst.

14. Produktionssystem (200), das eine oder mehrere Steuereinheiten zum Betreiben des Produktionssystems (200) umfasst, wobei der Betrieb durch die eine oder die mehreren Steuereinheiten basierend auf dem gemäß einem der vorhergehenden Ansprüche erzeugten Produktionsplan (BOP) gesteuert wird.

## Revendications

1. Un procédé de création d'un plan (BOP) de production, le procédé comprenant :
obtenir un ou plusieurs produits et/ou
caractéristiques (E-BOM, CAD-BOM, M-BOM) de production pour un produit à fabriquer ;
déterminer, par un moteur (10) de règles, sur la base du produit et/ou des caractéristiques de production, un ou plusieurs éléments de bibliothèque parmi une pluralité d'éléments (I 1a, 11b) de la bibliothèque, dans lequel chaque élément de bibliothèque comprend une ou plusieurs descriptions de processus se rapportant au produit et/ou aux caractéristiques de production ; et
agencer, par le moteur (10) de règles, la une ou les plusieurs descriptions de processus en un plan (BOP) de production,
créer, par un outil (13) d'ingénierie, sur la base du plan de production, une ou plusieurs fonctions d'un programme de commande ; et
transmettre le programme de commande à une unité (14) de commande, commandant la production ; et/ou charger, par l'unité (14) de commande, le programme de commande ; et
faire fonctionner, par l'unité (14) de commande, une ou plusieurs machines (16) de fabrication suivant les fonctions du programme de commande.

2. Le procédé suivant la revendication 1, comprenant en outre : mettre en mémoire, et éventuellement mettre à jour, la pluralité d'éléments (11a, 11b) de bibliothèque dans une mémoire d'un dispositif de traitement de données et/ou faire fonctionner le moteur (10) de règles comme partie d'un système (12.) de planification de la production, qui est exécuté sur le dispositif (12a) de traitement de données.

3. Le procédé suivant la revendication 1 ou 2, comprenant en outre : obtenir, par le système (12) de planification de la production, une instruction pour la création d'un plan de production d'un produit à fabriquer.

4. Le procédé suivant la revendication 3, dans lequel le plan de production du produit comprend une variante nouvelle du produit.

5. Le procédé suivant l'une des revendications 1 à 4, comprenant en outre : déterminer, par le système (12) de planification de la production, une information sémantique à partir du ou des plusieurs produits et/ou caractéristiques de production.

6. Le procédé suivant la revendication 5, dans lequel la détermination comprend appliquer le un ou plusieurs produits et/ou caractéristiques de production à un modèle de données.

7. Le procédé suivant la revendication 6, dans lequel le modèle de données est une ontologie.

8. Le procédé suivant l'une quelconque des revendications 1 à 7, dans lequel la détermination par le moteur (10) de règles comprend comparer l'information sémantique du ou plusieurs produits et/ou caractéristiques de production à la description de processus de la pluralité d'éléments de bibliothèque.

9. Le procédé suivant la revendication 8, dans lequel la comparaison repose sur un raisonnement sémantique.

10. Le procédé suivant l'une quelconque des revendications 1 à 9, dans lequel la création par l'outil (13) d'ingénierie comprend compiler le plan de production en un code machine.

11. Le procédé suivant l'une quelconque des revendications 1 à 10, dans lequel le procédé est un procédé mis en œuvre par ordinateur.

12. Le procédé suivant l'une quelconque des revendications 1 à 11, dans lequel le un ou plusieurs produits et/ou caractéristiques de production comprennent un contenu de production, un temps de production, et/ou une quantité de production telle que dans un format de fichier E-BOM, M-BOM et/ou CAD.

13. Un programme (12). d'ordinateur mis en mémoire, de préférence sur un support non transitoire, le programme d'ordinateur comprenant un système (12) de planification de la production et un moteur (10) de règles suivant l'une quelconque des revendications précédentes.

14. Un système (200) de production comprenant une ou plusieurs unités de commande pour faire fonctionner le système (200) de production, dans lequel le fonctionnement est commandé par la une ou les plusieurs unités de commande sur la base du plan (BOP) de production créé suivant l'une quelconque des revendications précédentes.
